# FASCICULE DE BREVET EUROPEEN

(11) **EP 3 085 419 B1**
(45) Date de publication et mention de la délivrance du brevet: **07.11.2018**
(21) Numéro de dépôt: 16158934.6
(22) Date de dépôt: 07.03.2016
(51) Int. Cl.: A62C 2/10, A62C 2/14, F01D 21/00, G01M 15/14, A62C 3/00, F01D 25/28, B64F 5/60, A62C 3/08, B64D 27/16

(54) **BANC D'ESSAIS DE TURBOREACTEUR D'AERONEF AVEC OBTURATEURS**
PRÜFBANK FÜR TURBOREAKTOR EINES LUFTFAHRZEUGS MIT OBTURATOREN
TEST BENCH FOR AN AIRCRAFT TURBOJET ENGINE WITH OBTURATORS

(30) Priorité: 30.03.2015 BE 201505197
(43) Date de publication de la demande: 26.10.2016
(73) Titulaire: Safran Aero Boosters SA, 4041 Herstal (BE)
(72) Inventeur: TACCOGNA, Gaetano, 4690 Bassenge (BE)
(74) Mandataire: Lecomte & Partners

(56) Documents cités:
- EP-A1- 2 336 507
- WO-A1-98/57093
- US-A- 6 044 696

## Description

### Domaine technique

L'invention a trait aux essais des turbomachines d'aéronef. Plus précisément, l'invention concerne un banc d'essais au sol pour une turbomachine d'aéronef.

### Technique antérieure

Lors de la conception ou de l'entretien d'une turbomachine, tel un turboréacteur, différents tests sont réalisés afin de valider son bon fonctionnement. Ces tests permettent de contrôler la résistance lors de phases de fonctionnement prolongées, en maintenant des régimes, des efforts prédéterminés. Lors de ces tests, une série de mesures sont effectuées pour surveiller des paramètres clés. Ces mesures peuvent à la fois s'effectuer directement sur la turbomachine, ou sur son environnement.

Afin de conduire de tels tests, la turbomachine est installée dans un banc d'essais spécifiques. Celui-ci est adapté pour recréer des conditions de vol tout en restant au sol. Un tel banc d'essais présente un couloir formant un passage recevant la turbomachine. Des cheminées verticales délimitent les extrémités du couloir pour former une entrée et une sortie ; recevant puis rejetant le flux d'air propulsé par la turbomachine. Des dispositifs réduisent les nuisances sonores inhérentes au fonctionnement de la turbomachine, et qui sont propagées par les cheminées.

Le document EP 1 860 416 A2 divulgue un banc d'essais permettant de déterminer la poussée d'un turboréacteur. Le banc d'essais présente une configuration en « U », c'est-à-dire qui montre une cheminée d'entée, une cheminée de sortie, les cheminées étant reliées par un couloir horizontal. En amont, un premier grillage supporte des capteurs de pression, puis une grille permet d'arrêter des débris juste en entrée de la bouche d'admission du moteur 4. Le couloir est cloisonné en aval, il est complété par un détuneur.

Pendant un essai, une conduite d'huile ou de carburant peut rompre. Un incendie moteur risque alors de se déclarer. Un tel évènement peut dégrader le banc d'essais, et en particulier ses capteurs. Naturellement, la turbomachine elle-même peut subir de lourds dégâts. Les conséquences d'un tel incident provoquent de lourds dommages, nécessitant ensuite des réparations qui retardent encore la possibilité de réutiliser la turbomachine. Ce scénario devient paradoxal dans le contexte d'une révision, puisqu'un test est censé autoriser le vol d'une turbomachine au lieu d'ajouter de l'attente. De lourdes pertes financières résultent de ces immobilisations au sol.

Le document EP2336507A1 divulgue un banc d'essais pour turboréacteur. Ce banc d'essais comporte une cheminée d'entrée et une cheminée de sortie qui sont reliées par un passage dans lequel est placé le turboréacteur lors des phases de test.

Le document WO98/57093A1 divulgue un équipement pour obturer un tuyau. L'équipement est constitué d'une structure souple étanche et d'un générateur de gaz pyrotechnique qui assure le gonflage de cette structure souple.

### Résumé de l'invention

### Problème technique

L'invention a pour objectif de résoudre au moins un des problèmes posés par l'art antérieur. Plus précisément, l'invention a pour objectif de réduire l'impact d'un incendie se déclarant dans le banc d'essais. L'invention a également pour objectif d'étouffer au plus vite un incendie se déclarant dans un banc d'essais pour turbomachine.

### Solution technique

On aura bien compris que l'invention a pour objet un banc d'essais formant un couloir d'écoulement destiné à recevoir un moteur, notamment un turboréacteur, le banc étant équipé d'au moins un, préférentiellement deux obturateurs. L'un est placé en amont de la zone destinée à recevoir la turbomachine, l'autre étant placé en aval de ladite zone.

L'invention a également pour objet un banc d'essais selon la revendication 1.

Selon un mode avantageux de l'invention, l'obturateur comprend une partie mobile qui est délimitée par le passage et qui est apte à l'obturer.

Selon un mode avantageux de l'invention, l'obturateur comprend des portions mobiles les unes par rapport aux autres, lors des mouvements d'ouverture et/ou de fermeture de l'obturateur, les portions viennent en contact les unes des autres et/ou s'éloignent les unes des autres.

Selon un mode avantageux de l'invention, l'obturateur comprend au moins une portion mobile qui est configurée pour pivoter entre la position ouverte et la position fermée de l'obturateur.

Selon un mode avantageux de l'invention, le passage comprend un couloir destiné à recevoir le moteur, et/ou des cheminées verticales, l'obturateur étant préférentiellement situé dans le couloir.

Selon un mode avantageux de l'invention, l'obturateur comprend des guides d'air articulés, dans la position ouverte les guides sont parallèles à un même plan de sorte à pouvoir guider la circulation parallèlement au passage. L'aspect parallèlement au passage peut être entendu comme parallèlement aux parois, éventuellement verticales, du passage.

Selon un mode avantageux de l'invention, l'obturateur comprend des guides d'air articulés, dans la position ouverte les guides sont parallèles à l'allongement principal du passage, et/ou dans la position fermée les guides sont inclinés par rapport audit allongement principal. L'allongement principal peut être la ligne droite principale à l'intérieur du passage.

Selon un mode avantageux de l'invention, les guides sont chanfreinés de sorte à pouvoir être en contact plan sur plan avec le guide voisin lorsque l'obturateur est fermé.

Selon un mode avantageux de l'invention, l'élément gonflable est un ballon.

Selon un mode avantageux de l'invention, qu'il comporte des moyens d'alimentation en gaz, tel une pompe et/ou un réservoir, pour gonfler l'élément gonflable.

Selon un mode avantageux de l'invention, le passage comprend un tube collecteur apte à collecter un flux d'air entraîné par le moteur, notamment de désaccordeur, l'élément gonflable étant placé au niveau du tube de sorte à pouvoir l'obturer.

Selon un mode avantageux de l'invention, le tube collecteur comprend une portion tubulaire configurée pour faire saillie vers le moteur, préférentiellement le banc comprend une cloison traversant le passage, la portion tubulaire faisant saillie par rapport à ladite cloison.

Selon un mode avantageux de l'invention, l'obturateur comprend une enveloppe élastique, le module de Young de l'enveloppe étant compris entre 1 MPa et 100 MPa, préférentiellement compris entre 2 MPa et 40 MPa, éventuellement compris 5 MPa et 20 MPa.

Selon un mode avantageux de l'invention, le passage comprend une zone de fixation du moteur à tester, ladite zone étant placée entre les deux obturateurs, préférentiellement la zone de fixation comprend un bras de fixation tel un poteau descendant.

Selon un mode avantageux de l'invention, le passage comporte un sens principal de circulation d'air de l'entrée vers la sortie, éventuellement le sens principal est selon l'axe central du passage.

Selon un mode avantageux de l'invention, l'obturateur est mobile entre une position ouverte et une position fermée.

Selon un mode avantageux de l'invention, le passage comprend des parois en béton, notamment en béton armé de treillis métallique, et éventuellement des fondations.

Selon un mode avantageux de l'invention, le passage et/ou le couloir mesure plus de 10 m de long, préférentiellement plus de 20 m, plus préférentiellement plus de 70 m. La longueur du couloir peut être mesurée en ligne droite.

Selon un mode avantageux de l'invention, le passage présente une section de passage supérieure à 4 m2, préférentiellement supérieure à 25 m2, plus préférentiellement supérieure à 50 m2, éventuellement supérieure à 100 m2.

Selon un mode avantageux de l'invention, le banc d'essais comprend un bras de fixation, éventuellement une potence ou une suspente, destinée à la fixation du moteur.

Selon un mode avantageux de l'invention, le moteur est apte à exercer une poussée supérieure ou égale à 20 kN, préférentiellement supérieure ou égale à 80 kN, plus préférentiellement supérieure ou égale à 200 kN, éventuellement supérieure ou égale à 500 kN. Le bras de fixation étant conçu pour reprendre les efforts correspondants.

Selon un mode avantageux de l'invention, l'obturateur est mobile entre une configuration rétractée et une configuration déployée où il coupe la circulation d'air dans le passage entre l'entrée et la sortie.

Selon un mode avantageux de l'invention, l'obturateur est étanche ; par exemple en configuration et en position ouverte et/ou fermée.

L'invention a également pour objet un procédé de gestion d'incendie selon la revendication 12.

Selon un mode avantageux de l'invention, en condition habituelle de fonctionnement, notamment en l'absence d'incendie, l'obturateur est placé dans le passage et présente une configuration ouverte autorisant une circulation d'air via le passage.

Selon un mode avantageux de l'invention, l'obturateur comprend un élément gonflable qui est déployé dans le passage par gonflage en cas d'incendie, et éventuellement l'élément gonflable est alimenté en fluide de gonflage de manière continue.

Selon un mode avantageux de l'invention, en cas d'incendie l'obturateur est rempli d'un gaz neutre.

De manière générale, les modes avantageux de chaque objet de l'invention sont également applicables aux autres objets de l'invention. Dans la mesure du possible, chaque objet et chaque mode avantageux sont combinables.

### Avantages apportés

La présence de la portion de l'obturateur qui bascule permet d'améliorer sa compacité et de limiter son impact sur le flux circulant dans le banc d'essais. En position ouverte ; chaque obturateur est partiellement, préférentiellement totalement inscrit dans le passage, notamment le couloir, ce qui permet de l'obturer encore plus vite.

Exploiter la présence de guide permet d'utiliser des éléments nécessaires au guidage du flux. Ils y baignent lors du fonctionnement normal. Par conséquent, leur changement de configuration est d'autant plus rapide. Un basculement d'une fraction de tour suffit à clore le passage. Cinq secondes sont suffisantes pour qu'ils forment un obturateur.

Un élément gonflable bénéficie d'une faible inertie. Son enveloppe souple peut s'adapter aux surfaces du passage avec lesquelles elle coopère. Son matériau souple offre intrinsèquement une véritable étanchéité dans le passage. Le gonflage peut s'effectuer en quelques secondes, ce qui augmente la sécurité du banc. Les deux obturateurs peuvent être manipulés de manière automatique. L'adhérence par frottement de l'élément gonflable permet de résister à l'effort de poussée du flux entraîné par le turboréacteur. Cette résistance est sollicitée pendant le temps d'autorotation du turboréacteur, en plus de la résistance à une température de l'ordre de 300°C.

Deux obturateurs permettent de confiner de manière étanche une zone réduite, de sorte à accélérer l'asphyxie d'un incendie qui s'y déclencherait. Ils sont placés à proximité du turboréacteur, ce qui permet de limiter la quantité d'oxygène restant dans l'enceinte qu'ils forment. Cela accélère encore l'étouffement de l'incendie.

### Brève description des dessins

La figure 1 représente un banc d'essais selon l'invention recevant un moteur à tester.
La figure 2 est un schéma d'un obturateur amont en position ouverte selon l'invention.
La figure 3 est un schéma de l'obturateur amont en position fermée selon l'invention, en réponse à un incendie.
La figure 4 est un schéma d'un obturateur aval en position ouverte selon l'invention.
La figure 5 est un schéma d'un obturateur aval en position fermée selon l'invention, en réponse à un incendie.

### Description des modes de réalisation

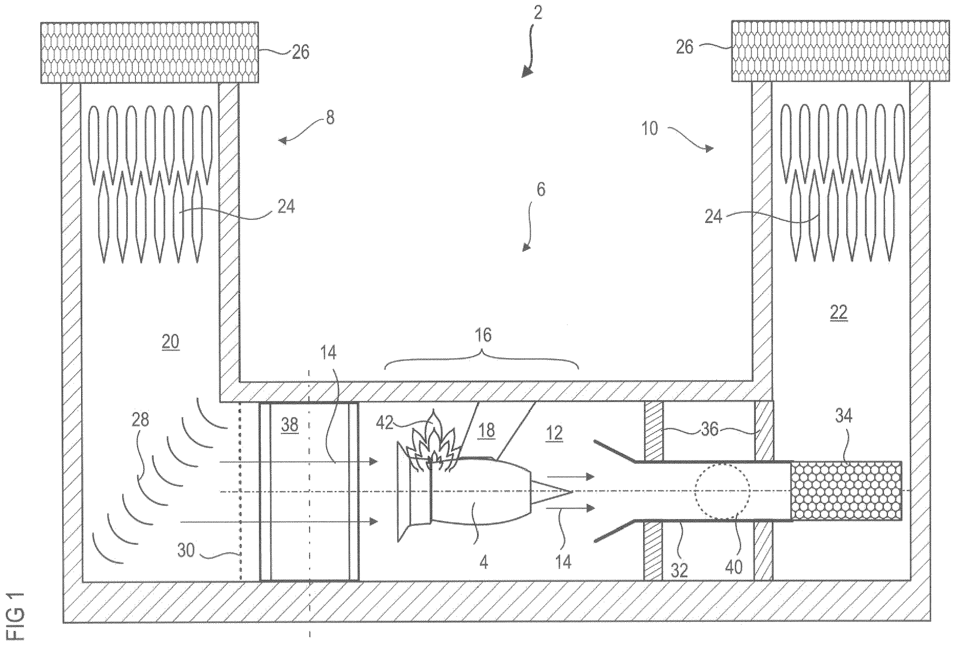

La figure 1 représente de manière simplifiée un banc d'essais 2 moteur 4, plus particulièrement un banc d'essais 2 pour turbomachine 4, notamment pour turboréacteur 4 d'avion.

Le banc d'essais 2 forme une infrastructure, une construction. Il comprend un passage 6 avec une entrée 8 et une sortie 10. Le passage 6 peut comprendre un couloir 12 essentiellement long. Sa longueur peut être supérieure à 10 m, préférentiellement supérieure à 30 m ; plus préférentiellement supérieure à 50 m. La longueur du couloir 12 permet la circulation en ligne droite d'un flux d'air 14 ou circulation d'air 14, en y limitant les tourbillons. Afin de limiter la résistance à l'écoulement, en particulier l'entrée d'un flux d'air 14 dans le turboréacteur 4, le couloir 12 peut présenter une section de passage supérieure ou égale à 20m2, préférentiellement supérieure ou égale à 50 m2. La section de passage, ou section libre, peut être mesurée en amont de la zone 16 destinée à recevoir le turboréacteur 4. La section de passage peut être observable sur au moins un quart de la longueur du couloir 12, préférentiellement sur la majorité.

Le couloir 12 peut présenter une zone de fixation 16, éventuellement munie d'un bras de fixation 18, où le turboréacteur 4 est monté. Le bras 18 peut s'étendre verticalement depuis le plafond du couloir 12, à la manière d'une colonne ou d'un poteau. Le bras 18 permet de monter le turboréacteur 4 avec un déport, et de centrer ce dernier au milieu du couloir 12. Le centrage est vertical et horizontal.

Le couloir 12 peut être délimité par des cheminées verticales (20 ; 22) en entrée 8 et en sortie 10. Elles permettent une admission d'air et un échappement verticaux, en élévation. Pour réduire les nuisances sonores, elles peuvent comporter des baffles sonores 24, ou lames acoustiques 24, permettant d'absorber des ondes sonores. Des dispositifs 26 complémentaires peuvent être présents en entrée 8 et en sortie 10 pour éviter des inversions d'écoulements, qui perturberaient les conditions de tests. La configuration en « U » détaillée ici n'est pas indispensable ; d'autres configurations, par exemple sans cheminées sont envisageables. Seule une chambre peut former le passage.

A la jonction entre la cheminée amont et le couloir, le banc est équipé d'une série de lames de déviation 28. Elles permettent de renvoyer l'air descendant de la cheminée d'entrée 20 dans une direction horizontale. Elles s'étendent horizontalement, et traversent tout le couloir 12. Elles présentent des profils courbes. En entrée du couloir 12, le banc 2 présente optionnellement une grille 30 permettant d'intercepter des débris susceptibles de perturber l'essai et d'endommager le turboréacteur.

En aval du turboréacteur 4, le banc 2 comporte un tube 32 collectant le flux d'air 14 propulsé par le turboréacteur ; dont ses gaz d'échappement. L'embouchure du tube peut former un entonnoir, un cône, en aval. Le tube collecteur 32 contribue à absorber le bruit généré par l'essai. Le tube collecteur 32 est disposé horizontalement et comprend à sa sortie un diffuseur 34 dans la cheminée de sortie 22.

Le tube collecteur 32 peut être maintenu dans le banc à l'aide d'au moins une cloison 36, préférentiellement deux cloisons 36. Ces cloisons 36 s'étendent verticalement et transversalement dans le couloir 12. L'une d'elle peut former une séparation entre le couloir 12 et la cheminée de sortie 22. Elles forment des séparations étanches, qui permettent de contenir le flux issu 14 du turboréacteur 4.

Pour endiguer un incendie pouvant se produire au niveau de la turbomachine, le banc d'essais est doté d'un obturateur amont 38 et/ou d'un obturateur aval 40. Ce dernier est ici représenté en position fermée à l'aide d'un trait pointillé. Deux obturateurs sont présentés, un seul est nécessaire au sens de l'invention puisqu'un sprinkler peut être utilisé en combinaison pour éteindre un incendie 42.

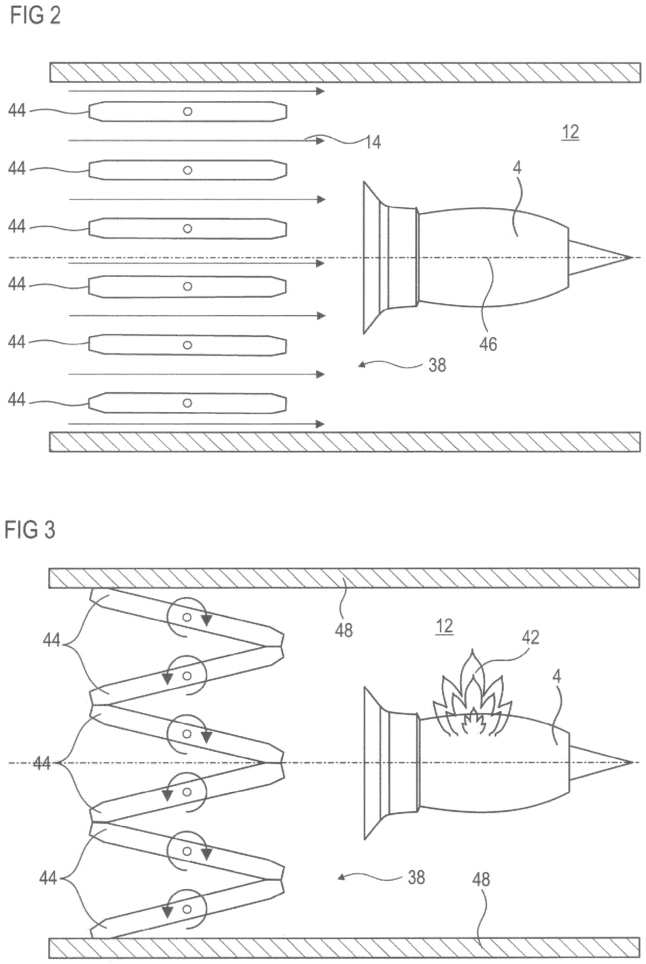

La figure 2 est une vue du dessus de l'obturateur amont 38 en position ouverte. Une portion du couloir 12 et le turboréacteur 4 y sont représentés. Le banc 2 fonctionne en condition normale de test, de manière habituelle.

L'obturateur amont 38 comporte des guides d'air 44 pour guider le flux d'air 14 axialement par rapport à l'axe 46 du turboréacteur 4. Ces guides d'air 44 sont articulés de sorte à pouvoir pivoter selon des axes verticaux. Alternativement, ils pourraient être horizontaux et être articulés de manière pivotante autour d'axe horizontaux.

Les guides d'air 44 sont espacés latéralement, et sont ici parallèles les uns aux autres. Ils forment une rangée. Ils sont également parallèles à un même plan, ce qui permet de guider ; d'orienter ; un flux vers le turboréacteur. Les guides 44 permettent de limiter, préférentiellement supprimer, les tourbillons pouvant subsister dans l'écoulement en raison de sa vitesse. Ici, six guides 44 sont représentés, néanmoins tout autre nombre est envisageable, tel que quinze ou trente.

La figure 3 est une vue du dessus de l'obturateur amont 38 en position fermée. Une portion du couloir 12 et le turboréacteur 4 y sont représentés. L'obturateur amont 38 est en position fermée en raison du départ de l'incendie 42, ce qui correspond à un fonctionnement inhabituel, anormal du banc.

Pour basculer dans la position fermée les guides 44 pivotent les uns vers les autres jusqu'à se rencontrer. Ils tournent d'une fraction de tour inférieure à un huitième de tour, préférentiellement inférieure à un seizième de tour. Les guides 44 viennent en contact le long de leurs bords amont et aval, préférentiellement sur toute leur hauteur. Des moteurs et des tringles actionnent les guides 44.

Les guides 44 décrivent un zigzag, des dents. Les guides 44 se répartissent en deux jeux de guides 44 placés par alternance. Les guides 44 tournent dans des sens opposés : les uns dans le sens horaire, les autres dans le sens antihoraire. Les guides 44 d'un jeu deviennent parallèles à un premier plan, les guides 44 de l'autre jeu deviennent parallèles à un deuxième plan qui est incliné par rapport au premier plan.

Leurs contacts en amont et en aval peuvent être essentiellement étanches, tout comme le contact entre les guides 44 latéraux et les parois 48 du couloir 12. Pour optimiser cet aspect, les guides sont avantageusement chanfreinés pour former des contacts plan sur plan avec les chanfreins voisins. Les chanfreins peuvent être dotés de joints. En outre, ces chanfreins améliorent l'aérodynamisme.

Eventuellement, les lames de déviation du banc sont articulées et peuvent former un obturateur en les tournant jusqu'à ce qu'elles viennent en contact, par exemple étanche, les unes des autres. Les baffles sonores peuvent également être articulés de sorte à former des obturateurs.

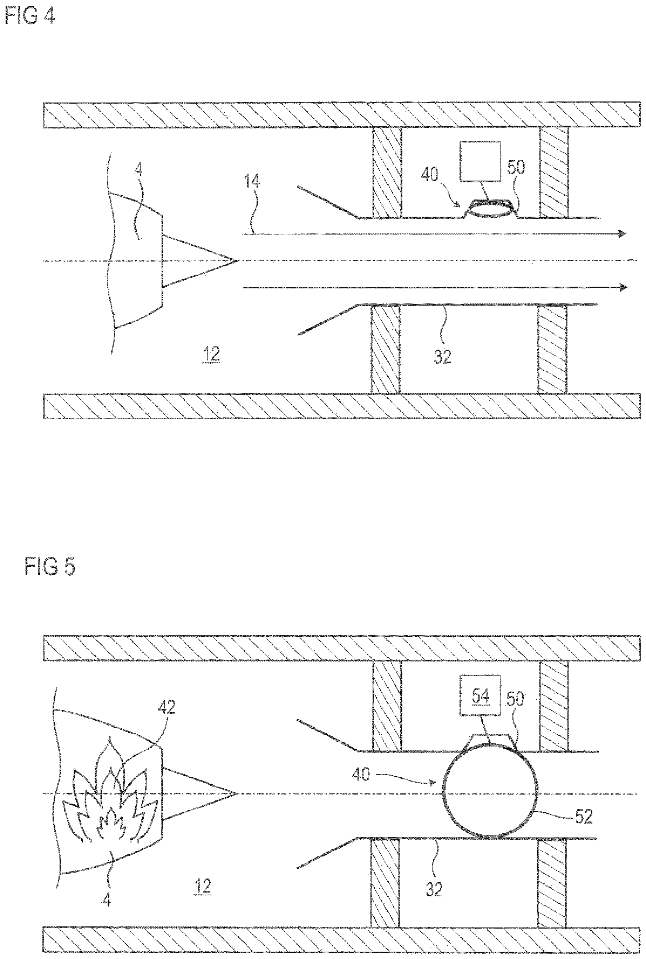

La figure 4 esquisse un agrandissement de l'obturateur aval 40 en position ouverte qui autorise la circulation d'un flux. Une partie aval du turboréacteur 4 et le tube collecteur 32 y sont matérialisés.

L'obturateur aval 40 est placé dans le couloir 12, au niveau du tube 32, en aval de la turbomachine 4. L'obturateur aval 40 peut être un élément gonflable 40, telle une vessie ou un ballon 40. En position ou configuration ouverte, il peut être logé dans une niche 50, par exemple en partie supérieure du tube 32. Cette niche 50 permet de maintenir l'obturateur aval 40 en retrait par rapport au flux 14 dans le tube 32, pour ne pas ralentir l'écoulement.

La figure 5 esquisse un agrandissement de l'obturateur aval 40 en position fermée suite au départ d'un incendie 42. Une portion du couloir 12 et le turboréacteur 4 y sont représentés.

L'obturateur aval 40 est déployé au travers de la section passante du tube 32. Il peut comprendre une enveloppe 52 souple, permettant une déformation entre une configuration rétractée et une configuration déployée. L'enveloppe 52 peut être élastique, et s'agrandir lors du gonflage de l'obturateur 40. L'enveloppe 52 peut comprendre un élastomère de silicone, et/ou du polyuréthane, et/ou du caoutchouc. Ces matériaux peuvent être renforcés mécaniquement et/ou thermiquement.

En configuration gonflée, l'obturateur 40 peut être sphérique, ou présenter toute autre forme correspondant à celle du tube 32. L'obturateur 40 est adapté pour boucher ce tube 32 de manière étanche, pour éviter le renouvellement de l'air autour du turboréacteur 4.

Le gonflage peut s'effectuer à l'aide d'un gaz neutre. Un tel gaz peut contribuer à étouffer des flammes en cas de fuite. Ce gaz est pressurisé pour conserver la forme obturatrice de l'obturateur. Pour le gonflage, le banc 2 peut comprendre des moyens d'alimentation 54 en gaz avec des conduits, une pompe ou un réservoir telle une bombonne. Ces moyens 54 sont avantageusement placés en dehors du tube 32, éventuellement en dehors du couloir 12.

Le tube 32 peut présenter un profil carré, et non exclusivement circulaire. L'obturateur amont 40 peut barrer le passage en quelques secondes, ce qui permet d'agir au plus vite. Il ne nécessite pas d'opération de déplacement, de dégagement d'équipement. Une simple commande manuelle peut provoquer le gonflage, tout comme le pourrait un capteur d'incendie branché au moyens d'alimentation 54.

Lorsque l'incendie 42 est maîtrisé, chaque obturateur est rétracté. Les guides peuvent reprendre une configuration ouverte, parallèle. L'élément gonflable 40 peut être dégonflé, de sorte qu'il permette à nouveau un passage au travers du tube 32. Une aspiration, ou un actionnement peut permettre de le rétracter, par exemple dans sa niche 50. Les guides peuvent également retrouver un agencement parallèle à l'axe du couloir.

## Revendications

1. Banc d'essais (2) pour turboréacteur ou pour turbopropulseur (4), le banc d'essais (2) comprenant :
- une entrée (8) ;
- une sortie (10) ;
- un passage (6) permettant une circulation d'air entre l'entrée (8) et la sortie (10), le passage (6) étant destiné à recevoir le moteur (4) lors des essais ;
le passage (6) comprend au moins un obturateur mobile (24 ; 28 ; 38 ; 40) apte à couper la circulation d'air (14) entre l'entrée (8) et la sortie (10) de sorte à pouvoir étouffer un incendie (42) se produisant dans le passage (6) au niveau du moteur (4),
**caractérisé en ce que**
l'obturateur (40) comprend un élément gonflable (40), et
l'obturateur (40) est un premier obturateur, le passage comprenant en outre un deuxième obturateur (38) apte à couper la circulation d'air entre l'entrée et la sortie du passage, les obturateurs (38 ; 40) étant configurés pour définir une enceinte autour du moteur (4) de sorte à pouvoir étouffer un incendie se produisant dans le passage.

2. Banc (2) selon la revendication 1, **caractérisé en ce que** le deuxième obturateur (38) comprend une partie mobile qui est délimitée par le passage (6) et qui est apte à l'obturer.

3. Banc (2) selon l'une des revendications 1 à 2, **caractérisé en ce que** le deuxième obturateur (38) comprend des portions mobiles les unes par rapport aux autres, lors des mouvements d'ouverture et/ou de fermeture du deuxième obturateur (38), les portions viennent en contact les unes des autres et/ou s'éloignent les unes des autres.

4. Banc (2) selon l'une des revendications 1 à 3, **caractérisé en ce que** le deuxième obturateur (38) comprend au moins une portion mobile qui est configurée pour pivoter entre la position ouverte et la position fermée du deuxième obturateur (38).

5. Banc (2) selon l'une des revendications 1 à 4, **caractérisé en ce que** le deuxième obturateur (38) comprend des guides d'air (44) articulés, dans la position ouverte les guides (44) sont parallèles à un même plan de sorte à pouvoir guider la circulation d'air (14) parallèlement au passage (6).

6. Banc (2) selon l'une des revendications 1 à 5, **caractérisé en ce que** le deuxième obturateur (38) comprend des guides d'air (44) articulés, dans la position ouverte les guides (44) sont parallèles à l'allongement principal du passage (6), et/ou dans la position fermée les guides (44) sont inclinés par rapport audit allongement principal.

7. Banc (2) selon l'une des revendications 5 à 6, **caractérisé en ce que** les guides (44) sont chanfreinés de sorte à pouvoir être en contact plan sur plan avec le guide (44) voisin lorsque l'obturateur (38) est fermé.

8. Banc (2) selon l'une des revendications 1 à 7, **caractérisé en ce que** l'élément gonflable (40) est un ballon (40).

9. Banc (2) selon la revendication 8, **caractérisé en ce qu'**il comporte des moyens d'alimentation (54) en gaz, tel une pompe et/ou un réservoir, pour gonfler l'élément gonflable (40).

10. Banc (2) selon l'une des revendications 8 à 9, **caractérisé en ce que** le passage (6) comprend un tube collecteur (32) apte à collecter un flux d'air (14) entraîné par le moteur (4), notamment de désaccordeur, l'élément gonflable (40) étant placé au niveau du tube (32) de sorte à pouvoir l'obturer.

11. Banc (2) selon la revendication 10, **caractérisé en ce que** le passage (6) comprend une zone de fixation (16) du moteur à tester, ladite zone (16) étant placée entre les deux obturateurs (38 ; 40), préférentiellement la zone de fixation (16) comprend un bras de fixation (18) tel un poteau descendant.

12. Procédé de gestion d'incendie (42) dans un banc d'essais (2) pour turboréacteur (4) ou pour turbopropulseur, le banc d'essais (2) comprenant un passage (6) dans lequel est fixé le moteur (4) en vue d'y effectuer un essai,
le banc d'essais (2) comprend un obturateur (24 ; 28 ; 38 ; 40) apte à fermer le passage (6), et en ce qu'en cas d'incendie (42) l'obturateur (24 ; 28 ; 38 ; 40) est déployé depuis le passage (6),
**caractérisé en ce que**
l'obturateur (40) comprend un élément gonflable (40), et
l'obturateur (40) est un premier obturateur, le passage comprenant en outre un deuxième obturateur (38) apte à couper la circulation d'air entre l'entrée et la sortie du passage, les obturateurs (38 ; 40) étant configurés pour définir une enceinte autour du moteur (4) de sorte à pouvoir étouffer un incendie se produisant dans le passage, le banc d'essais (2) étant éventuellement conforme à l'une des revendications 1 à 11.

13. Procédé selon la revendication 12, **caractérisé en ce qu'**en condition habituelle de fonctionnement, notamment en l'absence d'incendie (42), le premier obturateur est placé dans le passage (6) et présente une configuration ouverte autorisant une circulation d'air (14) via le passage (6).

14. Procédé selon l'une des revendications 12 à 13, **caractérisé en ce que** l'élément gonflable (40) qui est déployé dans le passage (6) par gonflage en cas d'incendie est alimenté en fluide de gonflage de manière continue.

## Patentansprüche

1. Prüfstand (2) für ein Turbostrohltriebwerk oder Turboproptriebwerk (4), wobei der Prüfstand (2) umfasst:
- einen Einlass (8);
- einen Auslass (10);
- einen Durchgang (6), der eine Zirkulation von Luft zwischen dem Einlass (8) und dem Auslass (10) zulässt, wobei der Durchgang (6) dazu vorgesehen ist, das Triebwerk (4) während des Prüfens aufzunehmen;
wobei der Durchgang (6) mindestens eine bewegbare Verschlussvorrichtung (24; 28; 38; 40) umfasst, die fähig ist, die Zirkulation von Luft (14) zwischen dem Einlass (8) und dem Auslass (10) abzuschließen, um ein in dem Durchgang (6) an dem Triebwerk (4) auftretendes Feuer (42) ersticken zu können,
**dadurch gekennzeichnet, dass**
die Verschlussvorrichtung (40) ein aufblasbares Element (40) umfasst, und
die Verschlussvorrichtung (40) eine erste Verschlussvorrichtung ist, wobei der Durchgang weiter eine zweite Verschlussvorrichtung (38) umfasst, die dafür ausgelegt ist, die Zirkulation von Luft zwischen dem Einlass und dem Auslass des Durchgangs abzuschneiden, wobei die Verschlussvorrichtungen (38; 40) dafür ausgelegt sind, eine Umhüllung um das Triebwerk (4) abzugrenzen, um das Ersticken des in dem Durchgang auftretenden Feuers zuzulassen.

2. Stand (2) nach Anspruch 1, **dadurch gekennzeichnet, dass** die zweite Verschlussvorrichtung (38) einen bewegbaren Teil umfasst, der von dem Durchgang (6) begrenzt wird und der diesen verschließen kann.

3. Stand (2) nach einem der Ansprüche 1 bis 2, **dadurch gekennzeichnet, dass** die zweite Verschlussvorrichtung (38) Teile (44; 52) umfasst, die während der Öffnungs- und/oder Schließbewegungen der zweiten Verschlussvorrichtung (38) in Bezug zueinander bewegbar sind, wobei die Teile (44; 52) miteinander in Kontakt kommen und/oder sich voneinander weg bewegen.

4. Stand (2) nach einem der Ansprüche 1 bis 3, **dadurch gekennzeichnet, dass** die zweite Verschlussvorrichtung (38) mindestens einen bewegbaren Teil umfasst, der dafür ausgelegt ist, zwischen der offenen Position und der geschlossenen Position der zweiten Verschlussvorrichtung (38) zu schwenken.

5. Stand (2) nach einem der Ansprüche 1 bis 4, **dadurch gekennzeichnet, dass** die zweite Verschlussvorrichtung (38) gelenkig gelagerte Luftführungen (44) umfasst und in der offenen Position die Führungen (44) parallel zu einer einzigen Ebene sind, um die Zirkulation von Luft (14) parallel zu dem Durchgang (6) leiten zu können.

6. Stand (2) nach einem der Ansprüche 1 bis 5, **dadurch gekennzeichnet, dass** die zweite Verschlussvorrichtung (38) gelenkig gelagerte Luftführungen (42) umfasst, in der offenen Position die Führungen (42) parallel zur Hauptrichtung des Durchgangs (6) sind und/oder in der geschlossenen Position die Führungen (12) bezüglich dieser Hauptrichtung geneigt sind.

7. Stand (2) nach einem der Ansprüche 5 bis 6, **dadurch gekennzeichnet, dass** die Führungen (42) angefast sind, sodass sie in Ebene-zu-Ebene-Kontakt mit der benachbarten Führung (42) sein können, wenn die Verschlussvorrichtung (38) geschlossen ist.

8. Stand (2) nach einem der Ansprüche 1 bis 7, **dadurch gekennzeichnet, dass** das aufblasbare Element (40) ein Ballon (40) ist.

9. Stand (2) nach Anspruch 8, **dadurch gekennzeichnet, dass** er Gaszufuhrmittel (54), wie etwa eine Pumpe und/oder einen Tank, zum Aufblasen des aufblasbaren Elements (40) umfasst.

10. Stand (2) nach einem der Ansprüche 8 bis 9, **dadurch gekennzeichnet, dass** der Durchgang (6) eine Kollektorröhre (32) umfasst, die fähig ist, einen von dem Triebwerk (4) angetriebenen Luftstrom (14) zu sammeln, insbesondere für einen Abgasschalldämpfer, wobei das aufblasbare Element (40) in Höhe der Röhre (32) angeordnet ist, um sie verschließen zu können.

11. Stand (2) nach Anspruch 10, **dadurch gekennzeichnet, dass** der Durchgang (6) eine Fixierzone (16) für das zu prüfende Triebwerk umfasst, wobei die Zone (16) zwischen den zwei Verschlussvorrichtungen (38; 40) angeordnet ist; bevorzugt umfasst die Fixierzone (16) einen Fixierarm (18), wie etwa eine Absenkstange.

12. Verfahren zur Überwachung von Feuer (42) in einem Prüfstand (2) für ein Turbostrahltriebwerk oder Turboproptriebwerk (4), wobei der Prüfstand (2) einen Durchgang (6) umfasst, worin das Triebwerk (4) fixiert wird, um geprüft zu werden,
wobei der Prüfstand (2) eine Verschlussvorrichtung (24; 28; 38; 40) umfasst, die fähig ist, den Durchgang (6) zu schließen, und wobei im Fall von Feuer (42), die Verschlussvorrichtung (24; 28; 38; 40) von dem Durchgang (6) entfaltet wird,
**dadurch gekennzeichnet, dass**
die Verschlussvorrichtung (40) ein aufblasbares Element (40) umfasst, und
die Verschlussvorrichtung (40) eine erste Verschlussvorrichtung ist, wobei der Durchgang weiter eine zweite Verschlussvorrichtung (38) umfasst, die dafür ausgelegt ist, die Zirkulation von Luft zwischen dem Einlass und dem Auslass des Durchgangs abzuschneiden, wobei die Verschlussvorrichtungen (38; 40) dafür ausgelegt sind, eine Umhüllung um das Triebwerk (4) abzugrenzen, um das Ersticken des in dem Durchgang auftretenden Feuers zuzulassen, wobei der Prüfstand (2) optional gemäß einem der Ansprüche 1 bis 11 ist.

13. Verfahren nach Anspruch 12, **dadurch gekennzeichnet, dass** im normalen Betriebszustand, insbesondere in Abwesenheit von Feuer (42), die erste Verschlussvorrichtung (24; 28; 38; 40) in dem Durchgang (6) angeordnet ist und eine offene Konfiguration aufweist, die eine Zirkulation von Luft (14) durch den Durchgang (6) zulässt.

14. Verfahren nach einem der Ansprüche 12 bis 13, **dadurch gekennzeichnet, dass** das aufblasbare Element (40), das in dem Durchgang (6) im Fall von Feuer durch Aufblasen entfaltet wird, kontinuierlich mit Aufblasfluid gespeist wird.

## Claims

1. Test bench (2) for a turbojet or turboprop engine (4), the test bench (2) comprising:
- an inlet (8);
- an outlet (10);
- a passage (6) allowing a circulation of air between the inlet (8) and the outlet (10), the passage (6) being intended to receive the engine (4) during testing;
the passage (6) comprising at least one movable shutter (24; 28; 38; 40) able to cut off the circulation of air (14) between the inlet (8) and the outlet (10) so as to be able to suffocate a fire (42) occurring in the passage (6) at the engine (4),
**characterized in that**
the shutter (40) comprises an inflatable element (40), and
the shutter (40) is a first shutter, the passage comprising furthermore a second shutter (38) configured to cut off the circulation of air between the inlet and the outlet of the passage, the shutters (38; 40) being configured to delimit an enclosure around the engine (4) so as to allow the suffocation of the fire occurring in the passage.

2. Bench (2) according to Claim 1, **characterized in that** the second shutter (38) comprises a movable part which is delimited by the passage (6) and which is able to seal it.

3. Bench (2) according to any of Claims 1 to 2, **characterized in that** the second shutter (38) comprises portions (44; 52) which are movable relative to each other during the opening and/or closing movements of the second shutter (38), the portions (44; 52) coming into contact with each other and/or moving apart from each other.

4. Bench (2) according to any of Claims 1 to 3, **characterized in that** the second shutter (38) comprises at least one movable portion which is configured to pivot between the open position and the closed position of the second shutter (38).

5. Bench (2) according to any of Claims 1 to 4, **characterized in that** the second shutter (38) comprises articulated air guides (44), and in the open position the guides (44) are parallel to a single plane so as to be able to guide the circulation of air (14) parallel to the passage (6).

6. Bench (2) according to any of Claims 1 to 5, **characterized in that** the second shutter (38) comprises articulated air guides (42), in the open position the guides (42) are parallel to the main elongation of the passage (6), and/or in the closed position the guides (12) are inclined relative to said main elongation.

7. Bench (2) according to any of Claims 5 to 6, **characterized in that** the guides (42) are chamfered so they can be in plane-to-plane contact with the adjacent guide (42) when the shutter (38) is closed.

8. Bench (2) according to any of Claims 1 to 7, **characterized in that** the inflatable element (40) is a balloon (40).

9. Bench (2) according to Claim 8, **characterized in that** it comprises gas supply means (54), such as a pump and/or a tank, for inflating the inflatable element (40).

10. Bench (2) according to one of Claims 8 to 9, **characterized in that** the passage (6) comprises a collector tube (32) able to collect an airflow (14) driven by the engine (4), in particular for a detuner, the inflatable element (40) being placed at the level of the tube (32) so as to be able to seal it.

11. Bench (2) according to Claim 10, **characterized in that** the passage (6) comprises a fixing zone (16) for the engine to be tested, said zone (16) being placed between the two shutters (38; 40), preferably the fixing zone (16) comprises a fixing arm (18) such as a descending post.

12. Method for managing fire (42) in a test bench (2) for a turbojet or turboprop engine (4), the test bench (2) comprising a passage (6) in which the engine (4) is fixed in order to be tested,
the test bench (2) comprising a shutter (24; 28; 38; 40) able to close the passage (6), and in the event of fire (42), the shutter (24; 28; 38; 40) is deployed from the passage (6),
**characterized in that**
the shutter (40) comprises an inflatable element (40), and
the shutter (40) is a first shutter, the passage comprising furthermore a second shutter (38) configured to cut off the circulation of air between the inlet and the outlet of the passage, the shutters (38; 40) being configured to delimit an enclosure around the engine (4) so as to allow the suffocation of the fire occurring in the passage, the test bench (2) being optionally in accordance to any of the claims 1 to 11.

13. Method according to Claim 12, **characterized in that** in the normal operating state, in particular in the absence of fire (42), the first shutter (24; 28; 38; 40) is placed in the passage (6) and has an open configuration allowing a circulation of air (14) via the passage (6).

14. Method according to one of Claims 12 to 13, **characterized in that** the inflatable element (40) which is deployed in the passage (6) by inflation in the event of fire is continuously supplied with inflation fluid.
